# EUROPÄISCHE PATENTSCHRIFT

(11) **EP 2 692 564 B1**
(45) Veröffentlichungstag und Bekanntmachung des Hinweises auf die Patenterteilung: **08.11.2017**
(21) Anmeldenummer: 13178945.5
(22) Anmeldetag: 01.08.2013
(51) Int. Cl.: B60J 7/22

(54) **Windschotteinrichtung für Cabriolet-PKW**
Wind deflector device for cabriolet cars
Dispositif pare-vent pour véhicule automobile cabriolet

(30) Priorität: 02.08.2012 DE 102012107110
(43) Veröffentlichungstag der Anmeldung: 05.02.2014
(73) Patentinhaber: iKON Fahrzeug Design und Engineering GbR, 85092 Kösching (DE); FKT GmbH, 85104 Pförring (DE)
(72) Erfinder: Körber, Stefan, 85092 Kösching (DE); Matschat, Dietman, 85117 Eitensheim (DE)
(74) Vertreter: Schlief, Thomas P.

(56) Entgegenhaltungen:
- EP-A1- 1 134 107
- EP-A1- 2 213 492
- EP-A2- 1 134 106
- EP-A2- 2 143 582
- DE-A1- 3 836 375
- DE-A1- 19 502 793
- DE-A1-102005 054 186
- DE-A1-102006 029 135
- DE-A1-102008 006 157
- DE-C1- 4 310 881
- US-A1- 2003 085 006
- US-A1- 2008 001 428

## Beschreibung

Die Erfindung betrifft eine Windschotteinrichtung für ein Personenkraftfahrzeug mit mindestens einem Rahmen und einer im Rahmen befestigten Flachmaterialbahn, wobei deren Rand mittels mindestens eines länglichen Befestigungselements in einer Nut im Rahmen eingespannt ist. Eine gattungsgemäße Windschotteinrichtung ist aus dem Dokument DE 195 02 793 A1 bekannt. Derartige Windschotteinrichtungen sind vielfältig bekannt. Sie werden zumeist hinter den Fahrer- und Beifahrersitzen positioniert, um den Nacken von Fahrer und Beifahrer vor der insbesondere durch die Frontscheibe erzeugten Windwalze zu schützen. In den meisten Fällen kann die Windschotteinrichtung aus ihrer Einbaustellung entfernt, ggf. durch ein- oder mehrfaches Klappen in eine raumsparendere Position überführt und dann im Fahrzeug verstaut werden.

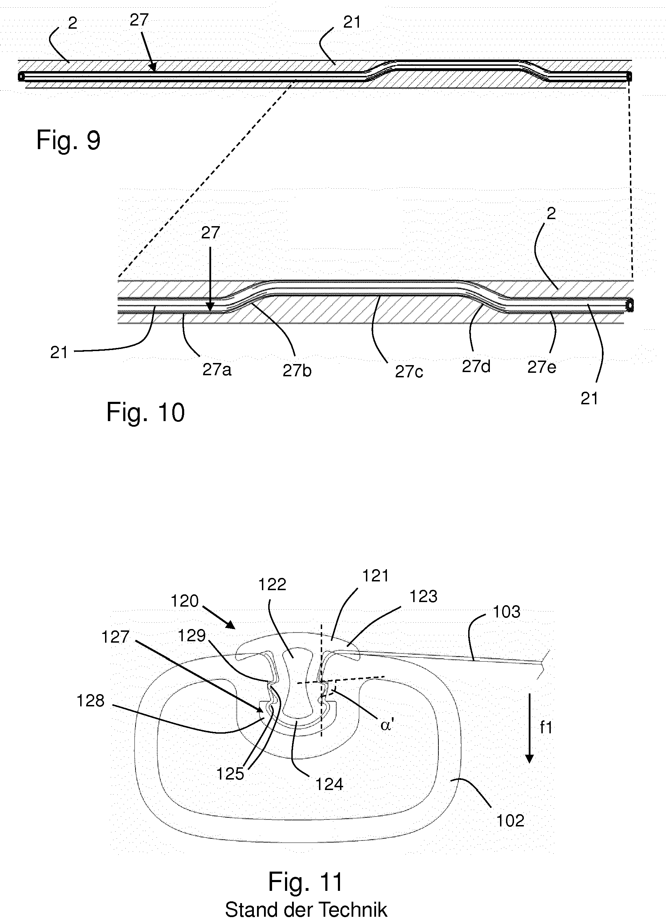

In der Fig. 11 ist dargestellt, wie eine Flachmaterialbahn 103 gemäß dem Stand der Technik in einen Rahmen 102, der vorliegend aus Aluminium als Strangware gefertigt ist, eingespannt ist. Hierbei ist der Rand der Flachmaterialbahn 103 über den gesamten Umfang auf eine im Rahmen 102 gebildete Nut 127 gelegt und dann ein Befestigungselement 20, genauer ein Keder 121 mit einem breiten Kederkopf 123 und - vorliegend - zwei am Kederstumpf 124 angeordneten Umfangsrippen 125, von oben in diese Nut 127 gedrückt. Der Keder 121 wird hierbei durch Hinterhakung der Umfangsrippen 125 in entsprechend übereinanderliegenden, in der Nut 127 ausgebildeten Hinterschneidungen 129 gehalten. Unter Hinterhakung wird hierbei verstanden, dass die Hinterschneidung 129 gegenüber der Einschubrichtung f1 des Keders 121 einen Winkel α' von 90° oder mehr einnimmt, s. Fig. 11. Die Hinterschneidungen 129 verlaufen demnach leicht aufwärts gegenüber der Einpressrichtung f1. Des Weiteren verhindert eine mit in den Keder 121 eingespritzte Kunststoffseele 122 ein Einknicken des Keders 121 bei der Montage und baut Druck zu den Seiten in Richtung der Nutwände auf. Auf diese Weise wird der Rand der Flachmaterialbahn 103 zwischen dem Kederstumpf 124 einerseits und den Nutwänden andererseits - allerdings nicht dem Nutboden, da ein Freiraum 128 zwischen Kederstumpf 124 und Nutboden bleibt - eingeklemmt und durch die Hinterhakungen gehalten, so dass die Flachmaterialbahn 103 gespannt wird. Der Kederkopf 123 liegt hierbei auf dem Nutrand an und kann nicht in diesen hineinrutschen.

Im Falle eines gespritzten Kunststoffrahmens sind aufgrund der Hinterschneidungen 129 Öffnungen im Rahmen 102 auf der Auswurfseite (entspräche in Fig. 11 der Unterseite des Rahmens 102) des Spritzwerkzeugs notwendig, die mittels eines Rahmendeckels verdeckt werden.

Nachteilig bei diesen bekannten Windschotteinrichtungen ist, dass der gesamte Prozess des Einspannens relativ umständlich und unpräzise ist. Im Falle von gespritzten Kunststoffrahmen sind zudem aufwändige und teure Spritzgusswerkzeuge für die Herstellung des Rahmens notwendig. Zudem ist in diesem Fall die Anzahl der benötigten Teile für die vollständig zusammengebaute Windschotteinrichtung relativ hoch.

Es ist daher die Aufgabe der vorliegenden Erfindung, eine Windschotteinrichtung zur Verfügung zu stellen, die ein kostengünstigeres, einfacheres und präzises Einspannen der Flachmaterialbahn ermöglicht.

Diese Aufgabe wird durch die Merkmale des unabhängigen Anspruchs 1 gelöst.

Die Vorteile der Erfindung sind insbesondere darin zu sehen, dass ein höchst flexibel einsetzbares Instrumentarium bereitgestellt wird, um eine Flachmaterialbahn im Rahmen zu spannen. Dadurch, dass sich das Befestigungselement vollständig in der Nut verkeilt, kann eine präzise Einspannung realisiert werden. Insbesondere ist es möglich, bei aus Kunststoff hergestellten Rahmen bzw. Rahmenteilen auf Spritzgusswerkzeuge zu verzichten, welche zur Herstellung von mit großen Winkeln (zur Ermöglichung von Hinterhakungen) ausgestatteten Hinterschneidungen ausgebildet sind. Die Nut der erfindungsgemäßen Windschotteinrichtung benötigt keine solche, mittels Öffnungen auf der Auswurfseite des Spritzgusswerkzeugs hergestellten Hinterschneidungen, da das Befestigungselement ohne Hinterhakung in der Nut geklemmt wird. Ein besonderer Vorteil der Erfindung ist daher, dass somit auf einen Rahmendeckel verzichtet werden kann, der die Öffnungen auf der Auswurfseite verdecken müsste. Weitere Vorteile werden im weiteren Verlauf dieser Beschreibung deutlich.

Die in Anspruch 1 aufgeführte Möglichkeit von kleinwinkligen Hinterschneidungen bis 7° beinhaltet, dass bis zu solchen Winkeln (die üblicherweise sogar nur bei 0,5° bis 1° liegen) Zwangsentformungen möglich sind. Bei solchen Zwangsentformungen kann das Werkzeug auf seiner Druckseite aus dem Werkstück entfernt werden, so dass keine Öffnungen auf der Auswurfseite benötigt werden. Also kann auch bei diesen kleinwinkligen Hinterschneidungen ein Rahmendeckel weggelassen werden. Im Übrigen fällt unter den Begriff "keine Hinterschneidung" gemäß Anspruch 1 ebenfalls eine sich zur Nutöffnung hin öffnende Nutseitenwand. Demnach können auch beide Seitenwänden sich nach außen zur Nutöffnung hin öffnen. Denkbar sind auch Kombinationen einer sich öffnenden Seitenwand einerseits und eine gegenüber liegende Seitenwand mit gerader Fläche oder einer kleinwinkligen Hinterschneidung andererseits (beispielweise im Querschnitt schräge, z.B. parallel verlaufende, Nutseitenwände gegenüber der Vertikalen).

Es ist zu erwähnen, dass die Erfindung bei Windschotteinrichtungen mit nur einem Rahmen, der starr oder zusammenlegbar ist, oder bei Windschotteinrichtungen mit mehreren Rahmen, die ebenfalls jeweils starr oder zusammenlegbar, insbesondere faltbar, ausgebildet sind, einsetzbar ist.

Die Erfindung zeichnet sich dadurch aus, dass das mindestens eine Befestigungselement ein Keder ist, wobei in dem Keder ein umfangseitig offener oder geschlossener Hohlkanal verläuft. Beim Eindrücken des Keders kann dieser nach innen ausweichen, um eine großflächige und hohe Klemmkraft zu bewirken. Diese Ausgestaltung kommt einem einfachen Einbau und einer hohen Klemmwirkung zugute.

Eine besonders bevorzugte Ausführungsform zeichnet sich dadurch aus, dass der Keder einen umfangsseitig nicht-kreisförmigen, in Längsrichtung konstanten Querschnitt aufweist. Der Durchmesser des Keders in Querrichtung der Nut ist hierbei zum Zwecke des Verklemmens in der Nut größer als die Querschnittsbreite der Nut. Somit können die radial nach außen vorstehenden Abschnitte des Keders beim Klemmen der Flachmaterialbahn seitlich nach oben und unten ausweichen und somit die Klemmfläche erhöhen und die Klemmkraft verteilen. Derartige Strangware ist äußerst kostengünstig herzustellen.

Diesbezüglich hat es sich als sehr vorteilhaft erwiesen, wenn der Keder einen im Wesentlichen runden Querschnitt mit sternförmiger Umfangskontur aufweist. Versuche haben gezeigt, dass mit einem solchen Querschnitt des Keders, dessen Durchmesser größer ist als die Querschnittsbreite der Nut, eine äußerst feste Klemmung realisiert werden kann. Der runde Querschnitt verformt sich beim Einpressen in der Nut ungefähr zu einem Oval, wodurch die Klemmfläche vergrößert sowie der Druck vom Keder auf die Nutwände erhöht wird. Somit wird eine sehr gute Klemmung erreicht.

Alternativ ist aber auch die Verwendung eines Keders mit einem umfangsseitig kreisförmigen Querschnitt und einem größeren Durchmesser als die Nutbreite durchaus möglich. Auch hierbei vergrößert sich beim Einpressen des Keders in die Nut die Anlagefläche des Keders an die Nutwände.

Bevorzugt weist die Nut einen rechteckförmigen Querschnitt oder einen Querschnitt mit einem konkav gewölbten Nutboden auf, wobei der Nutboden zusammen mit den Seitenwänden auch insgesamt konkav ausgebildet sein kann, beispielsweise in der Querschnittsform eines Halbkreises. In den letztgenannten Fällen kann ein Keder mit einem zumindest teilweise konvex gewölbten Querschnitt zur großflächigen Anpassung an den Nutboden (mit dazwischen befindlicher Flachmaterialbahn) gewählt werden.

Besonders bevorzugt ist das längliche Befestigungselement, das in die besagte Nut eingepresst ist, elastisch ausgebildet. Es verkeilt sich daher in der Nut aufgrund der gegen die Nutwände gerichteten Elastizitätskräfte.

Mit dem erfindungsgemäßen länglichen bzw. strangförmigen Befestigungs-element sind sehr kleine Biegeradien möglich, insbesondere solche kleiner als 30 mm.

Mit besonderem Vorteil ist das besagte Befestigungselement ohne weitere Rückhaltmittel in der Nut gelagert. Vorteilhafterweise sind also keine Rückhaltmittel (Schrauben, Nieten oder die Nut teilweise überdeckende Stege, etc.) zum Lagern des Befestigungsmittels in der Nut vorgesehen. Vielmehr verbleibt das Befestigungsmittel aufgrund seiner Verkeilung (Haftreibung) von selbst in der Nut.

Mit besonderem Vorteil wird das Befestigungselement vollständig bis zum Nutboden in die Nut eingedrückt, so dass die dazwischen angeordnete Flachmaterialbahn sowohl am Befestigungselement als auch am Nutboden anliegt. Im Gegensatz zum Stand der Technik ist die Flachmaterialbahn somit auch von ihrer Unterseite zwischen dem Befestigungselement und dem Nutboden gehalten. Aber auch wenn das Befestigungselement in die Nut eingepresst, aber nicht bis zum Nutboden vorgeschoben ist, ist dies vorteilhaft, da das Befestigungselement sich seitlich derart an den Nutwänden abstützt, dass der Rand der Flachmaterialbahn hinreichend fest in der Nut geklemmt ist. Eine größere Klemmwirkung ist allerdings dann gegeben, wenn das Befestigungselement ganz bis zum Nutboden eingedrückt ist.

Da das Befestigungselement beim vollständigen Verschwinden in der Nut nicht mehr im Sichtbereich liegt, kann es mit einfachen Handgriffen schnell und unkompliziert in diese eingepresst werden. Es sind also keine teuren Pressen wie bei den bisherigen T-förmigen Kedern notwendig, die den Kopf des Keders schützen müssen, da sich dieser im Sichtbereich befindet. Gemäß einer weiteren, alternativen oder zusätzlichen Ausführungsform der Erfindung variiert die Tiefe der Nut entlang ihrem Verlauf. Hierdurch kann insbesondere bei vollständig bis auf den Nutboden vorgeschobenem Befestigungselement die Spannung des Randes der Flachmaterialbahn je nach Rahmenabschnitt eingestellt werden. Insbesondere in Eckbereichen des Rahmens, wo die Zugbelastung relativ hoch ist, kann die Nut flacher ausgeführt sein als in im Wesentlichen linearen Bereichen.

Der Keder bzw. das Befestigungselement kann beispielsweise aus EPDM (Ethylen-Propylen-Dien-Kautschuk), NBR (Nitril-Butadien-Kautschuk) oder einem anderen gummiähnlichen Material bestehen. Alternativ kann es aus Metall, vorteilhafterweise einem Nichteisen-Metall, bestehen, wobei deren Oberfläche insbesondere perforiert ausgebildet sein kann. Die Oberfläche des Befestigungselements ist vorzugsweise rau, kann aber auch glatt sein. Nicht zur Erfindung gehörend, kann alternativ zu einem Keder das mindestens eine Befestigungselement bei bestimmten Anwendungen mit nicht allzu hohen Anforderungen eine einfache Gummischnur sein.

In dem mindestens einen Befestigungselement ist vorzugsweise mindestens ein im Wesentlichen nicht-elastisches, in Längserstreckung des Befestigungselements verlaufendes Versteifungselement eingearbeitet, vorteilhafterweise während des Strangprozesses umspritzt. Dieses Versteifungselement weist in Längsrichtung eine definierte, höchstens nur kleine Zugelastizität auf, d.h. es zieht sich weder in der Länge zusammen oder leiert aus. Diese Maßnahme trägt demnach zu einer dauerhaften definierten Klemmkraft in Radialrichtung bei.

Gemäß einer entsprechend vorteilhaften Ausführungsform besteht das besagte Versteifungselement aus Nylon, das die entsprechende Zugfestigkeit aufweist. Gemäß einer Alternative kann eine im Wesentlichen starre Kunststoffseele, die einen größeren Durchmesser als die Nylonschnur aufweist, in das Befestigungselement eingearbeitet sein. Auch diese verhindert einerseits eine ungewollte Längenausdehnung, ist andererseits aber auch aufgrund der Steifigkeit in der Lage, eine stabile Kraftverteilung bzw. eine Gegenkraft beim Zusammendrücken des Kedergummis zu bewirken.

Die Nut gemäß der Erfindung kann auf der Unter- oder der Oberseite des Rahmens angeordnet sein. Gleichfalls kann die Nut auf derjenigen Seite des Rahmens ausgebildet sein, die als Nicht-Sichtseite (z.B. die Unterseite eines den Fahrgastraum abdeckenden Abdeckungsrahmens) bezeichnet werden kann. Da gemäß der Erfindung keine aufwändigen, nur mit Rahmenöffnungen auf der Auswurfseite zu erzielenden Hinterschneidungen in der Nut vorhanden sind, kann in diesem Fall auf einen Rahmendeckel auf der Sichtseite verzichtet werden. Gleichzeitig kann eine deutliche Optikverbesserung erzielt werden, da die Rahmenprofile einstückig ausgebildet sein können.

Die Nut kann sogar am Innen- oder Außenrand des Rahmens, d.h. am Innen- oder Außenumfang des Rahmens, angeordnet sein.

Gemäß dem Vorgesagten ist es entsprechend der Erfindung insbesondere möglich und besonders vorteilhaft, dass der Rahmen ohne Rahmendeckel auskommt, da das Befestigungselement, wie beispielsweise ein strangförmiger Sternkeder, die Flachmaterialbahn hinreichend festklemmt.

Vorteilhafterweise kann das Befestigungselement soweit an der Außenkante des Rahmens entlang laufen, dass Verstärkungselemente, insbesondere angespritzte Verstärkungsrippen, im zumindest teilweise aus Kunststoff bestehenden Rahmen von der eingespannten Flachmaterialbahn überdeckt werden. Es ergibt sich somit eine äußerst einfache und optisch schlichte Gesamtkonstruktion, bei der einerseits die Verstärkungselemente von der Flachmaterialbahn verdeckt sind und andererseits der Keder in der Nut verschwindet und daher optisch kaum in Erscheinung tritt. Ebenso können sowohl die Herstellung vereinfacht als auch erhebliche Materialkosten sowie Bauteile eingespart werden.

Die Anordnung und der Verlauf des mindestens einen Befestigungselements, insbesondere eines Keders, näher an der Außenkante als an der Innenkante des Rahmens kann auch als eigenständiger Erfindungsaspekt angesehen werden, unabhängig von der speziellen Ausgestaltung der Nut bzw. vom Vorhandensein überhaupt einer Nut.

In diesem Zusammenhang ist es von besonderem Vorteil, wenn die Flachmaterialbahn in Bereichen, in denen sie den Rahmen überdeckt, blickdichter ausgestaltet ist als im Bereich der freien Fläche zwischen den Rahmenprofilen. Eine solche Blickdichtigkeit, die zur optischen Verdeckung von insbesondere Verstärkungsrippen dient, kann auf verschiedene Art und Weise erreicht werden. Beispielsweise kann die Flachmaterialbahn in den überdeckenden Bereichen dichter gewirkt sein, während in den rahmenfreien Bereichen eine größere Blick- und auch Luftdurchlässigkeit gegeben ist. Der Blickdichteffekt lässt sich sowohl mit dem gleichen Gewirkematerial als auch - für die beiden unterschiedlichen Bereiche (Rahmenüberdeckung, freie Flächen) - unterschiedlichen Gewirkematerialien erreichen, die im letzteren Fall beispielsweise miteinander vernäht oder verschweißt sind.

Wenn - trotz des vollständigen Eindrückens des Befestigungselements bzw. des Keders in die Nut und damit eines möglichen vollständigen Verschwindens der Flachmaterialbahn in der Nut - noch ein Stück dieser Bahn aus der Nut herausschaut, kann dieses relativ sicher beschnitten werden, da die Klinge an der Nutwand oberhalb des Befestigungselements gut geführt werden kann. Es reduziert sich somit die Ausschussrate, da das Messer kaum abrutschen kann.

Die erfindungsgemäße Windschotteinrichtung kann aus einem oder zwei (oder auch mehr) Rahmen besteht. Bei einer entsprechenden Ausführungsform weist die Windschotteinrichtung mindestens zwei Rahmen auf, die gegeneinander verschwenkbar sind. Eine solche Windschotteinrichtung umfasst insbesondere vorteilhafterweise einen Abdeckungsrahmen und einen Windschottrahmen, die gegeneinander verschwenkbar sind. Die im Abdeckungsrahmen eingespannte Flachmaterialbahn deckt hierbei im eingebauten Zustand den Fahrgastraum hinter den Vordersitzen des PKW ab, während die im Windschottrahmen eingespannte Flachmaterialbahn im Wesentlichen senkrecht hinter den Rücklehnen von Fahrer- und Beifahrer aufgespannt ist und hier insbesondere Rücken- und Nackenpartie der vorderen Fahrzeuginsassen vor Windzug schützt. Statt jeweils einer im Abdeckungsrahmen und einer im Windschottrahmen eingespannten Flachmaterialbahn kann auch lediglich eine einzige, gemeinsame Flachmaterialbahn vorgesehen sein, die also zum Teil in dem Abdeckungsrahmen und zum Teil in dem Windschottrahmen eingespannt ist.

Bei einer solchen Windschotteinrichtung kann insbesondere der Abdeckungsrahmen und der Windschottrahmen aus jeweils mindestens zwei Teilrahmen bestehen, wobei die Teilrahmen jeweils mittels Schwenkscharnieren zueinander verschwenkbar sind, so dass die Windschotteinrichtung aus einer mindestens zweifach gefalteten Aufbewahrposition zunächst in eine Zwischenposition und dann in eine Gebrauchsposition zum Einbau in das Fahrzeug aufgefaltet werden kann.

Nachfolgend wird die Erfindung anhand von Zeichnungen näher erläutert. Es zeigen:
- **Fig. 1**: eine Windschotteinrichtung mit zwei gegeneinander verschwenkbaren Rahmen in perspektivischer Ansicht;
- **Fig. 2**: die Windschotteinrichtung der Fig. 1 in Vorderansicht;
- **Fig. 3**: die Windschotteinrichtung der Fig. 1 und 2 in Draufsicht;
- **Fig. 4**: einen Keder im Querschnitt;
- **Fig. 5**: einen Schnitt entlang A-A in der Fig. 3;
- **Fig. 6**: einen Schnitt entlang B-B in der Fig. 3;
- **Fig. 7**: eine Unteransicht eines Rahmens, teilweise in gebrochener Ansicht;
- **Fig. 8**: eine schematisch dargestellte Nut mit einer kleinwinkligen Hinterschneidung;
- **Fig. 9**: eine Sicht auf die Windschotteinrichtung der Fig. 3 in Richtung K;
- **Fig. 10**: einen vergrößerten Ausschnitt der Fig. 9, und
- **Fig. 11**: einen Querschnitt durch einen T-förmigen Keder, der in einer Nut eines Aluminiumrahmens hinterhakt ist, gemäß dem Stand der Technik.

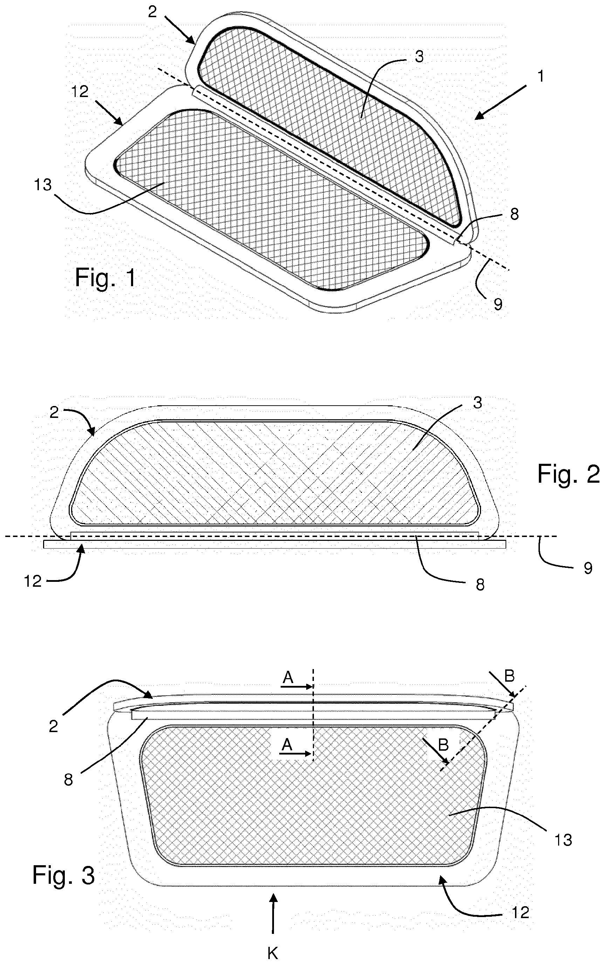

In den Fig.1-3 ist eine Windschotteinrichtung 1 dargestellt, die vorliegend aus einem Oberrahmen 2 und einem Unterrahmen 12 aufgebaut ist. Diese beiden Rahmen 2, 12 sind über ein Schwenkscharnier 8 miteinander verbunden, so dass der Oberrahmen 2 um die zum Schwenkscharnier 8 gehörige Schwenkachse 9 auf den Unterrahmen 12 geklappt werden kann. In den beiden Rahmen 2, 12 ist jeweils eine Flachmaterialbahn 3 bzw. 13 randseitig eingespannt.

Die Rahmen 2, 12 sind vorzugsweise aus Kunststoff in einem Spritzgussprozess hergestellt, können aber auch aus beispielsweise Aluminium bestehen. Auch ist es möglich, dass die Eckprofile beispielsweise aus Kunststoff und die linearen Profile aus Aluminium hergestellt sind, wobei diese Profile dann beim Zusammenbau ineinander gesteckt werden.

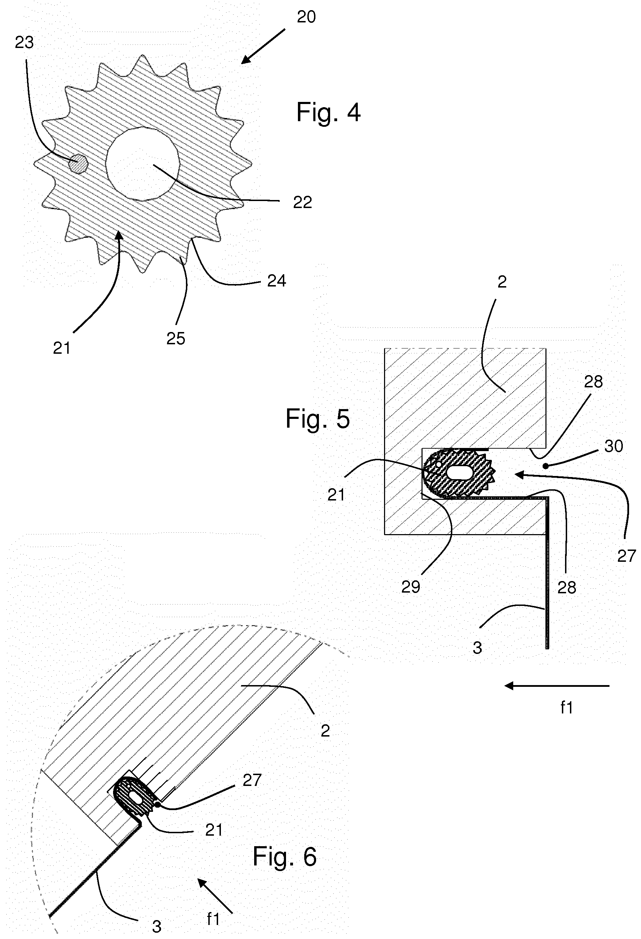

Zum Zwecke der besagten Einspannung der Flachmaterialbahnen 3, 13 ist erfindungsgemäß ein längliches, hier strangförmiges Befestigungselement 20 vorgesehen, das gemäß der dargestellten Ausführungsform aus einem Keder 21 und aus einem elastischen Gummimaterial, beispielsweise aus EPDM oder NBR, besteht. Der Keder 21 weist gemäß den Fig. 4-6 einen im Wesentlichen runden Querschnitt mit sternförmiger Umfangskontur auf, welche hierbei außenumfangseitig eine zahnradähnliche Kontur mit Einbuchtungen 24 und Zähnen 25 besitzt. Der Keder 21 weist des Weiteren - im nicht eingebauten Zustand - einen umfangseitig geschlossenen Hohlkanal 22 mit vorliegend rundem Querschnitt auf. Zudem ist im Kedermaterial ein nicht oder kaum elastisches, schnurförmiges Versteifungselement eingearbeitet, das in Strangrichtung verläuft. Es besteht gemäß einer bevorzugten Ausführungsform aus einer Nylonschnur. Die zugfeste Nylonschnur stellt eine einfache, aber wirkungsvolle Gegenschwundmaßnahme dar, so dass der Keder 21 sich nicht im Laufe der Zeit in Längsrichtung zusammenzieht.

In den beiden Rahmen 2 und 12 ist jeweils eine zu drei Seiten, nämlich an den seitlichen Nutwänden 28 und dem Nutboden 29, geschlossene Nut 27 mit rechteckförmigem Querschnitt (s. insbes. Fig. 5) ausgebildet. Die jeweilige Nut 27 verläuft ohne Unterbrechung in dem jeweiligen Rahmen 2 bzw. 12. Die Breite der Öffnung 30 der jeweiligen Nut 27 entspricht dem konstanten Abstand der Nutwände 28. Mit anderen Worten weist die Nut 27 keine Hinterschneidung auf.

Bei einem Rahmen 2 bzw. 12, der aus mehreren Profilelementen zusammengesteckt ist, geht die Nut 27 vorteilhafterweise von einem Profilelement ohne Unterbrechung ins angrenzende Profilelement über. Dies gilt auch für den Fall, dass verschiedene Profilelemente aus unterschiedlichen Werkstoffen bestehen, beispielsweise aus Kunststoff (z.B. die Eckprofile) und Aluminium (z.B. die Linearprofile).

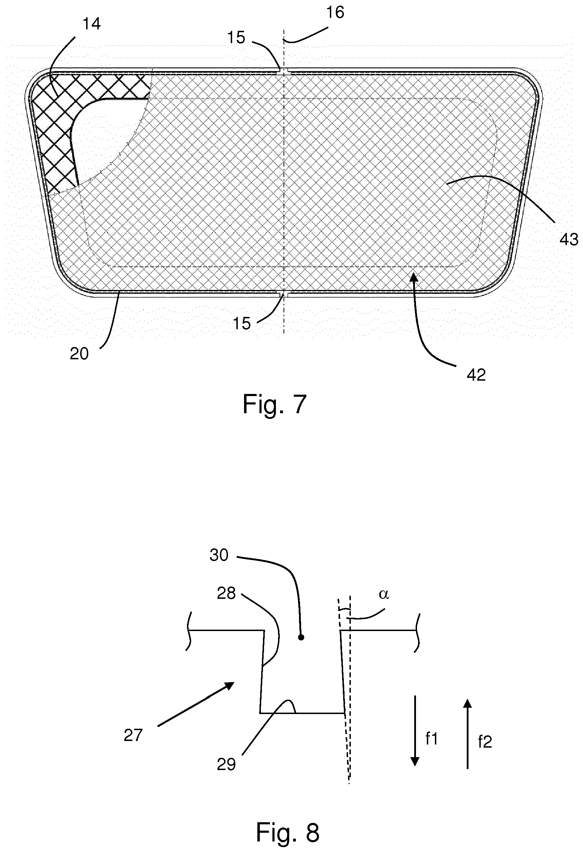

Wenn die beiden Rahmen 2, 12 gemäß einer nicht dargestellten Ausführungsform jeweils in Teilrahmen unterteilt sind, die gegeneinander verschwenkbar sind, sind die entsprechenden Nuten 27 selbstverständlich im Bereich dieser Schwenkscharniere unterbrochen (s.a. nachfolgende Fig. 7).

Es sei auch angemerkt, dass beispielsweise die Flachmaterialbahn 3 gemäß dem Stand der Technik im Oberrahmen 2 befestigt sein kann (z.B. wie in Fig. 11 dargestellt), während die Flachmaterialbahn 13 gemäß der Erfindung im Unterrahmen 12 gespannt ist - oder umgekehrt.

Zum Fixieren und Spannen der Flachmaterialbahnen 3 bzw. 13 in den jeweiligen Nuten 27 des Ober- und/oder Unterrahmens 2, 12 werden zuerst die Ränder der Flachmaterialbahn 3 bzw. 13 zurechtgeschnitten und dann über die jeweiligen Nutöffnungen 30 gelegt. Anschließend wird der jeweilige Keder 21 von oben unter Mitnahme des Randes der Flachmaterialbahn 3 bzw. 13 in die Nut 27 eingepresst und bis zum Nutboden 29 vorgeschoben, so dass der jeweilige Rand der Flachmaterialbahn 3 bzw. 13 zwischen den beiden Nutwänden 28 und dem Nutboden 29 einerseits und dem nun im Wesentlichen oval zusammengepressten Keder 21 andererseits geklemmt ist.

Der größte Außendurchmesser des unbelasteten Keders 21 ist zu diesem Zweck größer als der Abstand der Seitenwände 28 der Nut 27 oder jedenfalls größer als der freie Abstand der beiden sich in der Nut 27 gegenüberliegenden Flachmaterialflächen. Beim Einpressen des Keders 21 in die Nut 27 lässt sich der Keder 21 aufgrund seiner Elastizität sowie des Hohlkanals 22 umfangseitig zusammendrücken und relaxiert danach in seine i.W. ovalförmige Endposition, so dass er die Flachmaterialbahn 3 bzw. 13 in der jeweiligen Nut 27 klemmt und spannt.

Der Keder 21 ist derart in die im Rahmen 2 vorgesehene Nut 27 eingepresst, dass er darin - von der Seite gesehen - vollständig verschwindet. Mit anderen Worten ragt der Keder 21 nicht über die Nut 27 hinaus und bietet daher eine hervorragende Optik.

Wie des Weiteren den Fig. 5 und 6 zu entnehmen ist, weisen die beiden Rahmen, Ober- und Unterrahmen 2, 12, keinen Rahmendeckel auf, der gemäß der vorliegenden Erfindung nicht benötigt wird, da keine eine Hinterhakung ermöglichende Öffnung im Rahmen 2 bzw. 12 Verwendung findet.

In der Fig. 7 ist die Unterseite eines Rahmens 42 einer Windschotteinrichtung 1 dargestellt, der im Wesentlichen dem Unterrahmen 12 der Fig. 1-3 entspricht (wobei dort jeweils die Oberseite des Unterrahmens 12 gezeigt ist). Ein Unterschied besteht darin, dass der Rahmen 42 - der als Einzelrahmen oder als Ober- und/oder Unterrahmen einer zweirahmigen Windschotteinrichtung ausgebildet sein kann - zwei Klappscharniere 15 aufweist, um den Rahmen 42 um die Schwenkachse 16 zum Zwecke der Platzersparnis in zwei Teilrahmen zusammen zu falten. Wie weiterhin der Fig. 7 zu entnehmen ist, verläuft die Nut 27 beim Rahmen 42 auf der Unterseite dieses Rahmens 42 und hierbei wesentlich näher an der Rahmenaußenkante als an der Rahmeninnenkante. Somit lassen sich die aufgebrochen dargestellten Verstärkungsrippen 14, die der Stabilität des Rahmens 2 dienen, von der Flachmaterialbahn 43 weitflächig überdecken. Somit resultiert mit wenigen Bauteilen eine hervorragende Optik der erfindungsgemäßen Windschotteinrichtung 1, und dies sogar von der Unterseite des Unterrahmens her.

In der Fig. 8 ist eine erfindungsgemäße Nut 27 mit einer Hinterschneidung dargestellt, wobei der Winkel α zwischen der senkrechten Auswurfrichtung des Spritzgusswerkzeugs f1 und der in den Nuthohlraum geneigten Nutwand 28 nicht mehr als 7° beträgt. Ein solcher Winkel ist mit einer Zwangsentformung noch darstellbar. Eine Hinterhakung ist - im Gegensatz zum Stand der Technik - durch eine solche kleinwinklige Hinterschneidung nicht realisierbar. Auch in die Nut 27 ist ein Keder 21 gemäß der Fig. 4-6 pressbar, wobei alle vorgenannten Vorteile erzielbar sind.

Die Fig. 9 sowie deren Vergrößerung in Fig. 10 zeigt - von der Seite in Richtung K in Fig. 3 gesehen - eine exemplarisch dargestellte, variierende Tiefe der Nut 27 entlang ihres Verlaufs im Unterrahmen 12. Wie beispielhaft dargestellt, verläuft die Nut 27 in einem Abschnitt 27a mit konstanter Tiefe, bis sie in einem Abschnitt 27b schräg aufwärts verläuft, um dann wieder in einen Abschnitt 27c mit konstanter, aber geringerer Tiefe im Vergleich zum Abschnitt 27a zu laufen. Es schließt sich dann ein schräg abwärts verlaufender Nutabschnitt 27d an, der wiederum in einen Abschnitt 27e mit gleicher konstanter Tiefe wie der Abschnitt 27a übergeht. Mittels der variierenden Nuttiefe lassen sich optimale Spannungsverhältnisse der Flachmaterialbahnen 3 bzw. 13 erzielen, da der jeweiligen Geometrie der Rahmenabschnitte Rechnung getragen werden kann. Eine derartige Flexibilität ist mit den im Querschnitt T-förmigen Kedern gemäß dem Stand der Technik nicht zu erreichen, da diese durch die Auflage des breiten Kederkopfs auf dem Nutrand nicht in tiefere Nuten eingepresst werden konnten.

Unterschiedliche Nuttiefen im Oberrahmen 2 sind im Übrigen ebenfalls den Fig. 5 und 6 zu entnehmen, welche den Verlauf der Nut 27 an unterschiedlichen Stellen des Oberrahmens 2 darstellen. Im Eckbereich B-B sind geringere Nuttiefen realisiert als im linearen Abschnitt bei A-A, da in Rahmeneckbereichen die Zugbelastung auf die Flachmaterialbahn schon relativ hoch ist.

Die Erfindung ist nicht auf die dargestellten Ausführungsbeispiele beschränkt. Beispielsweise sind andere Querschnittsformen des Befestigungselements bzw. Keders möglich. Hier ist z.B. ein Keder verwendbar, der an seiner Oberseite, die in der Nutöffnung sichtbar ist, eben ausgebildet ist, während die Querschnittsabschnitte, die gegen die Nutseitenwände und den Nutboden gerichtet sind, kreisförmig ausgebildet sein können, beispielsweise mit der genannten sternförmigen Ausgestaltung. Andere Querschnittsformen des Keders sind ohne Weiteres ebenfalls möglich. Auch sind verschiedenste Nutquerschnitte im Rahmen des Anspruchs 1 realisierbar. Diese sind beispielsweise auf die Querschnittsgeometrie des Keders angepasst. Zum Beispiel kann der Keder auf seiner zum Nutboden gerichteten Seite eine Einsparung aufweisen, die mit einer entsprechenden Erhöhung im Nutboden korrespondiert, so dass eine großflächige und sichere Klemmung der Flachmaterialbahn resultiert.

### Bezugszeichenliste

- 1: Windschotteinrichtung
- 2: Oberrahmen
- 3: Flachmaterialbahn
- 8: Schwenkscharnier
- 9: Schwenkachse
- 12: Unterrahmen
- 13: Flachmaterialbahn
- 14: Verstärkungsrippen
- 15: Schwenkscharnier
- 16: Schwenkachse
- 20: Befestigungselement
- 21: Keder
- 22: Hohlkanal
- 23: Versteifungselement
- 24: Einbuchtungen
- 25: Zähne
- 27: Nut
- 28: seitliche Nutwände
- 29: Nutboden
- 30: Nutöffnung
- 42: Rahmen
- 43: Flachmaterialbahn
- 102: Rahmen
- 103: Flachmaterialbahn
- 121: T-förmiger Keder
- 122: Kunststoffseele
- 123: Kederkopf
- 124: Kederstumpf
- 125: Umfangsrippe
- 127: Nut
- 128: Freiraum
- 129: Hinterschneidung

## Patentansprüche

1. Windschotteinrichtung für ein Personenkraftfahrzeug mit mindestens einem Rahmen (2, 12; 42) und einer im Rahmen (2, 12; 42) befestigten Flachmaterialbahn (3, 13; 43), wobei deren Rand mittels mindestens eines länglichen Befestigungselements (20) in einer Nut (27) im Rahmen (2, 12; 42) eingespannt ist, wobei die Nut (27) keine oder nur kleinwinklige Hinterschneidungen mit einem Winkel (α) von nicht mehr als 7° gegenüber der Einschubrichtung (f1) des Befestigungselements (20) aufweist und wobei das mindestens eine Befestigungselement (20) als Keder (21) ausgebildet ist, wobei der Keder (21) einen größeren Durchmesser als die Nutbreite aufweist, **dadurch gekennzeichnet, dass** in dem Keder (21) ein seitlich offener oder ein umfangsseitig geschlossener Hohlkanal (22) verläuft.

2. Windschotteinrichtung nach Anspruch 1, **dadurch gekennzeichnet, dass** die Nut (27) einen rechteckförmigen Querschnitt oder einen Querschnitt mit einem konkav gewölbten Nutboden (29) aufweist.

3. Windschotteinrichtung nach Anspruch 1 oder 2, **dadurch gekennzeichnet, dass** das Befestigungselement (20) elastisch ausgebildet ist, in die besagte Nut (27) eingepresst ist und sich dort aufgrund der gegen die Flachmaterialbahn (3, 13; 43) und die Nutwände (28, 29) gerichteten Elastizitätskräfte verkeilt.

4. Windschotteinrichtung nach einem der vorhergehenden Ansprüche, **dadurch gekennzeichnet, dass** das besagte Befestigungselement (20) von selbst ohne weitere Rückhaltmittel in der Nut (27) gelagert ist.

5. Windschotteinrichtung nach einem der vorhergehenden Ansprüche, **dadurch gekennzeichnet, dass** das Befestigungselement (20) vollständig in der Nut (27) verschwindet.

6. Windschotteinrichtung nach einem der vorhergehenden Ansprüche, **dadurch gekennzeichnet, dass** der Rand der Flachmaterialbahn (3, 13; 43) durch den vom Befestigungsmittel (20) ausgeübten Druck gegen den Nutboden (29) anliegt.

7. Windschotteinrichtung nach einem der vorhergehenden Ansprüche, **dadurch gekennzeichnet, dass** der Keder (21) einen umfangsseitig nicht-kreisförmigen Querschnitt aufweist, wobei der Keder (21) vorzugsweise einen im Wesentlichen runden Querschnitt mit sternförmiger Umfangskontur aufweist.

8. Windschotteinrichtung nach einem der vorhergehenden Ansprüche, **dadurch gekennzeichnet, dass** das mindestens eine längliche Befestigungselement (20) aus EPDM, NBR oder einem anderen Gummimaterial bzw. Kunststoff oder aus einem Metall besteht.

9. Windschotteinrichtung nach einem der vorhergehenden Ansprüche, **dadurch gekennzeichnet, dass** in dem Keder (21) mindestens ein im Wesentlichen nicht-elastisches, in Längserstreckung des Befestigungselements (20) verlaufendes Versteifungselement (23) eingearbeitet ist, vorzugsweise bestehend aus Nylon und hierbei vorzugsweise in Form einer Nylonschnur, oder vorzugsweise ausgebildet als weitgehend starre Kunststoffseele.

10. Windschotteinrichtung nach einem der vorhergehenden Ansprüche, **dadurch gekennzeichnet, dass** die besagte Nut (27) überwiegend im Bereich der Außenkante des Rahmens (2, 12) verläuft.

11. Windschotteinrichtung nach einem der vorhergehenden Ansprüche, **dadurch gekennzeichnet, dass** der Rahmen (2, 12; 42) in der fertig montierten Windschotteinrichtung (1) keinen Rahmendeckel aufweist.

12. Windschotteinrichtung nach einem der vorhergehenden Ansprüche, **dadurch gekennzeichnet, dass** die im Rahmen (2, 12; 42) eingespannte Flachmaterialbahn (3, 13; 43) Verstärkungselemente des Rahmens (2, 12; 42) überdeckt, insbesondere angespritzte Verstärkungsrippen (14) in einem zumindest teilweise aus Kunststoff bestehenden Rahmen (2, 12; 42), und/oder dass die Flachmaterialbahn (3, 13; 43) in den den Rahmen überdeckenden Bereichen blickdichter ausgestaltet ist als im Bereich der freien Fläche (19) zwischen den Profilen des Rahmens.

13. Windschotteinrichtung nach einem der vorhergehenden Ansprüche, **dadurch gekennzeichnet, dass** die Tiefe der Nut (27) entlang ihres Verlaufs variiert.

14. Windschotteinrichtung nach einem der vorhergehenden Ansprüche, **dadurch gekennzeichnet, dass** sie mindestens zwei Rahmen (2, 12) umfasst, die gegeneinander verschwenkbar sind, wobei die Windschotteinrichtung (1) insbesondere einen Windschottrahmen bzw. Oberrahmen (2) und einen Abdeckungsrahmen bzw. Unterrahmen (12) umfasst, die gegeneinander verschwenkbar sind.

## Claims

1. A wind blocking device for a passenger car having at least one frame (2, 12; 42) and a flat material web (3, 13; 43) attached in the frame (2, 12; 42), the edge thereof being fixed in a groove (27) in the frame (2, 12; 42) by means of at least one oblong mounting element (20), the groove (27) comprising no undercuts or undercuts having only a small angle (α) of no greater than 7° relative to the insertion direction (f1) of the mounting element (20), and the at least one mounting element (20) being implemented as a bead (21), the bead (21) having a greater diameter than the groove width, **characterized in that** a hollow channel (22) open on the sides or closed on the circumference side runs in the bead (21).

2. The wind blocking device according to claim 1, **characterized in that** the groove (27) has a rectangular cross section or a cross section having a concavely curved groove floor (29).

3. The wind blocking device according to claims 1 or 2, **characterized in that** the mounting element (20) is elastic in design, is pressed into said groove (27) and wedges itself in place there due to the elasticity forces acting on the flat material web (3, 13; 43) and the groove walls (28, 29).

4. The wind blocking device according to any one of the preceding claims, **characterized in that** said mounting element (20) is supported in the groove (27) by itself, using no additional retaining means.

5. The wind blocking device according to any one of the preceding claims, **characterized in that** said mounting element (20) vanishes entirely in the groove (27).

6. The wind blocking device according to any one of the preceding claims, **characterized in that** the edge of the flat material web (3, 13; 43) contacts the groove floor (29) due to the pressure exerted by the mounting means (20).

7. The wind blocking device according to any one of the preceding claims, **characterized in that** the bead (21) has a non-circular cross section on a circumferential side, wherein the bead (21) preferably comprises a substantially round cross section having a star-shaped peripheral contour.

8. The wind blocking device according to any one of the preceding claims, **characterized in that** the at least one oblong mounting element (20) is made of EPDM, NBR, or another rubber material or plastic, or of a metal.

9. The wind blocking device according to any one of the preceding claims, **characterized in that** at least one non-elastic reinforcing element (23) extending in the longitudinal direction of the mounting element (20) is integrated in the bead (21), preferably made of nylon and herein preferably in the form of a nylon string, or preferably implemented as a mostly rigid plastic core.

10. The wind blocking device according to any one of the preceding claims, **characterized in that** said groove (27) runs predominantly in the region of the outer edge of the frame (2, 12).

11. The wind blocking device according to one of the preceding claims, **characterized in that** the frame (2, 12; 42) has no frame cover in the fully assembled wind blocking device (1).

12. The wind blocking device according to any one of the preceding claims, **characterized in that** the flat material web (3, 13; 43) fixed in the frame (2, 12; 42) covers reinforcing elements of the frame (2, 12; 42), particularly injection-molded reinforcing ribs (14) in a frame (2, 12; 42) made at least partially of plastic, and/or that the flat material web (3, 13; 43) is implemented as more opaque in the regions covering the frame than in the region of the exposed area (19) between the profiles of the frame.

13. The wind blocking device according to one of the preceding claims, **characterized in that** the depth of the groove (27) varies along the length thereof.

14. The wind blocking device according to any one of the preceding claims, **characterized in that** said wind blocking device comprises at least two frames (2, 12) pivoting relative to each other, wherein the wind blocking device (1) particularly comprises a windblocker frame or upper frame (2) and a cover frame or lower frame (12) for pivoting relative to each other.

## Revendications

1. Dispositif coupe-vent pour une voiture particulière avec au moins un cadre (2, 12 ; 42) et une bande de matériau plat (3, 13 ; 43) fixée dans le cadre (2, 12; 42), sachant que son bord est serré à l'aide d'au moins un élément de fixation longitudinal (20) dans une rainure (27) dans le cadre (2, 12 ; 42), sachant que la rainure (27) ne présente aucune ou présente seulement des contre-dépouilles à petits angles avec un angle (α) de moins de 7° par rapport à la direction d'insertion (f1) de l'élément de fixation (20), et sachant que l'au moins un élément de fixation (20) se présente sous la forme d'un bourrelet (21), sachant que le bourrelet (21) présente un diamètre supérieur à la largeur de la rainure, **caractérisé en ce qu'** un canal creux (22) ouvert latéralement ou fermé sur la circonférence s'étend dans le bourrelet (21).

2. Dispositif coupe-vent selon la revendication 1, **caractérisé en ce que** la rainure (27) présente une section transversale de forme rectangulaire ou une section transversale avec un fond de rainure (29) concave.

3. Dispositif coupe-vent selon la revendication 1 ou 2, **caractérisé en ce que** l'élément de fixation (20) se présente sous une forme élastique, qu'il est emmanché à force dans ladite rainure (27) et qu'il s'y coince sous l'effet des forces d'élasticité dirigées vers la bande de matériau plat (3, 13 ; 43) et les parois (28, 29) de la rainure.

4. Dispositif coupe-vent selon l'une des revendications précédentes, **caractérisé en ce que** ledit élément de fixation (20) est disposé dans la rainure (27) par lui-même, sans autre moyen de retenue.

5. Dispositif coupe-vent selon l'une des revendications précédentes, **caractérisé en ce que** ledit élément de fixation (20) disparaît totalement dans la rainure (27).

6. Dispositif coupe-vent selon l'une des revendications précédentes, **caractérisé en ce que** le bord de la bande de matériau plat (3, 13 ; 43) adhère sur le fond (29) de la rainure sous l'effet de la pression exercée par l'élément de fixation (20).

7. Dispositif coupe-vent selon l'une des revendications précédentes, **caractérisé en ce que** le bourrelet (21) présente une section transversale non-circulaire dans le sens de la circonférence, sachant que le bourrelet (21) présente de préférence une section transversale essentiellement ronde avec contour circonférentiel en étoile.

8. Dispositif coupe-vent selon l'une des revendications précédentes, **caractérisé en ce que** l'au moins un élément de fixation longitudinal (20) se compose d'EPDM, de NBR ou d'une autre matière en caoutchouc ou de matière plastique ou de métal.

9. Dispositif coupe-vent selon l'une des revendications précédentes, **caractérisé en ce qu'**au moins un élément raidisseur (23) essentiellement non-élastique s'étendant dans le sens longitudinal de l'élément de fixation (20) est incorporé dans le bourrelet (21), composé de préférence de nylon et se présentant de préférence sous la forme d'une ficelle en nylon, ou se présentant de préférence sous la forme d'une âme en matière plastique en grande partie rigide.

10. Dispositif coupe-vent selon l'une des revendications précédentes, **caractérisé en ce que** ladite rainure (27) s'étend en majeure partie dans la zone de l'arête extérieure du cadre (2, 12).

11. Dispositif coupe-vent selon l'une des revendications précédentes, **caractérisé en ce que** le cadre (2, 12 ; 42) ne comporte de couvercle de cadre à l'état définitivement monté du dispositif coupe-vent (1).

12. Dispositif coupe-vent selon l'une des revendications précédentes, **caractérisé en ce que** la bande de matériau plat (3, 13 ; 43) serrée dans le cadre (2, 12 ; 42) recouvre des éléments de renforcement du cadre (2, 12 ; 42), en particulier des nervures de renforcement (14) injectées dans un cadre (2, 12 ; 42) se composant au moins partiellement de matière plastique, et/ou que la bande de matériau plat (3, 13 ; 43) se présente sous une forme plus opaque dans les zones recouvrant le cadre que dans la zone de la surface libre (19) entre les profilés du cadre.

13. Dispositif coupe-vent selon l'une des revendications précédentes, **caractérisé en ce que** la profondeur de la rainure (27) varie le long de son étendue.

14. Dispositif coupe-vent selon l'une des revendications précédentes, **caractérisé en ce qu'**il présente au moins deux cadres (2, 12), qui sont pivotants l'un par rapport à l'autre, sachant que le dispositif coupe-vent (1) comprend en particulier un cadre de pare-vent ou cadre supérieur (2) et un cadre de recouvrement ou cadre inférieur (12), qui sont pivotants l'un par rapport à l'autre.
